# EUROPÄISCHE PATENTSCHRIFT

(11) **EP 3 089 329 B1**
(45) Veröffentlichungstag und Bekanntmachung des Hinweises auf die Patenterteilung: **12.08.2020**
(21) Anmeldenummer: 16162662.7
(22) Anmeldetag: 29.03.2016
(51) Int. Cl.: H02K 3/14, H02K 15/04, H02K 15/10

(54) **VERFAHREN ZUR HERSTELLUNG EINER ZAHNSPULE FÜR EINE ELEKTRISCHE MASCHINE**
METHOD FOR PRODUCING A TOOTH-WOUND COIL FOR AN ELECTRIC MACHINE
PROCEDE DE FABRICATION D'UNE BOBINE DENTEE POUR UNE MACHINE ELECTRIQUE

(30) Priorität: 27.04.2015 EP 15165152
(43) Veröffentlichungstag der Anmeldung: 02.11.2016
(73) Patentinhaber: Von Roll Schweiz AG, 4226 Breitenbach (CH)
(72) Erfinder: WEYL, Peter, 4107 Ettingen (CH)
(74) Vertreter: Rutz, Andrea

(56) Entgegenhaltungen:
- EP-A1- 0 680 133
- EP-A1- 1 115 190
- WO-A1-02/11268
- GB-A- 1 369 940
- JP-B2- 3 314 592
- US-A- 1 455 188
- US-A- 4 145 804

## Beschreibung

### TECHNISCHES GEBIET

Die vorliegende Erfindung betrifft ein Verfahren zur Herstellung einer Zahnspule für den Einsatz in einem Stator oder Rotor einer elektrischen Maschine. Bei der elektrischen Maschine kann es sich insbesondere um einen Elektromotor oder um einen Generator handeln.

### STAND DER TECHNIK

Elektrische Maschinen weisen üblicherweise einen Stator aufgebaut aus einzelnen geschichteten Magnetblechen auf, welcher eine Vielzahl von Zähnen und dazwischen angeordnete Längsnuten hat. In die Längsnuten sind speziell geformte Zahnspulen eingesetzt. Die Spulen umgeben dabei jeweils einen Zahn des Eisenkerns, um im Betrieb mittels eines magnetischen Flusses im Statorkern eine induktive Wechselwirkung mit einem im Statorinneren angeordneten Rotor zu ermöglichen.

Die Zahnspulen werden meist durch einen oder mehrere massiv ausgebildete Rechteckleiter gebildet. Derartige Zahnspulen sind beispielsweise in der US 2009/0072653 A1 und in der US 2010/0164319 A1 offenbart.

Es ist jedoch auch bekannt, für die Herstellung der Zahnspulen Litzendrähte zu verwenden, welche meist zu einem Rechteckprofil geformt sind. Ein Litzendraht weist, wie es dem Fachmann bekannt ist, eine Vielzahl von in der Regel dünnen Einzeldrähten auf, welche meist von einer gemeinsamen äusseren Drahtisolation umhüllt sind.

Die Verwendung von Litzendrähten für Zahnspulen von Statoren in elektrischen Maschinen ist beispielsweise in den Dokumenten WO 02/11268 A1, DE 102 60 315 A1, DE 10 2011 017 586 A1, DE 10 2007 025 938 A1, DE 10 2009 044 196 A1 und DE 10 2009 006 763 A1 offenbart.

Zur Gewährleistung der Funktion des Stromgenerators bzw. Elektromotors und zur Vermeidung von Kurzschlussströmen, sind die Zahnspulen, unabhängig davon ob sie auf massiven Rechteckleitern oder auf Litzendrähten basieren, jeweils mit einem Isolationsband umwickelt. Eine qualitativ hochwertige Isolation der Spulen ist im Hinblick auf die Qualität und die Langlebigkeit der elektrischen Maschine entscheidend. Die Spulenisolation stellt jedoch oft einen äusserst aufwändigen und kostenintensiven Herstellungsschritt bei der Herstellung von Zahnspulen dar. Aufgrund der speziellen Geometrie von üblichen Zahnspulen, mit einer relativ schmalen Öffnung, muss die Isolation oft entweder auf mühsame Art und Weise mittels einer meist langsam arbeitenden Spezialmaschine oder sogar von Hand vorgenommen werden, oder es muss deswegen sogar eine abgeänderte und somit suboptimale Konfiguration der elektrischen Maschine, zum Beispiel eine verteilte Wicklung, in Kauf genommen werden, die nur schwer zu realisieren ist.

In der WO 2012/009123 A2 wird vorgeschlagen, eine aus rechteckigen Flachdrähten gebildete Spule erst nach dem Umwickeln mit Isolationsband in ihre endgültige Form zu bringen, um dadurch eine einfachere Umwicklung zu ermöglichen. Die Spulenverformung ist jedoch nur mit einem hohen Kraftaufwand möglich. Ausserdem werden die Flachdrähte während der Spulenverformung in gewissen Bereichen gestaucht und tendieren dort dazu, aus ihrer Ebene heraus zu bauchen. Es besteht daher beim Formen der bereits isolierten Spule in ihre Endform eine erhebliche Gefahr, dass die Isolation beschädigt wird. Das endgültige Formen der Spule in ihre Endform ist bei dieser Vorgehensweise deshalb nur innerhalb bestimmten, engen Grenzen möglich, was bedeutet, dass sich die Spulenform während des Isolierens mit Isolationsband nicht allzu stark von der Endform unterscheiden darf.

Die GB 1369940 bezieht sich auf die Herstellung einer Formspule, also einer Spule, welche im Einsatz in einer elektrischen Maschine im Gegensatz zu einer Zahnspule mehrere Zähne eines Eisenkerns umfasst und daher eine entsprechend größere Spulenöffnung aufweist. Bei der Herstellung der in diesem Dokument offenbarten Formspule wird zuerst ein Draht zu einer Rundspule gewickelt, welche maschinell mit einem Isolationsband umwickelt und anschließend in die gewünschte längliche Form gebracht wird.

Ferner offenbart die EP0680133A1 eine aus Litzendraht gefertigte Statorwicklung.

### DARSTELLUNG DER ERFINDUNG

Es ist eine Aufgabe der vorliegenden Erfindung, ein Verfahren anzugeben, welches eine möglichst effiziente und somit kostengünstige Herstellung einer Zahnspule für eine elektrische Maschine erlaubt. Zur Lösung dieser Aufgabe wird ein Verfahren vorgeschlagen, wie es in Anspruch 1 angegeben ist. Vorteilhafte Ausgestaltungen der Erfindung sind in den abhängigen Ansprüchen angegeben

Die vorliegende Erfindung stellt also ein Verfahren zur Herstellung einer Zahnspule für den Einsatz in einem Stator oder Rotor einer elektrischen Maschine zur Verfügung, wobei das Verfahren zumindest die folgenden Schritte aufweist:
- Wickeln von zumindest einem Litzendraht zu einer Rundspule;
- Umwickeln dieser Rundspule mit Isolationsband; sowie
- Formen der mit dem Isolationsband umwickelten Rundspule in die endgültige Form einer Zahnspule.

Die genannten Verfahrensschritte werden also in der angegebenen Reihenfolge durchgeführt. Da einer oder mehrere Litzendrähte verwendet werden, welche zudem bereits mit Isolationsband umwickelt werden bevor sie in die endgültige Form der Zahnspule gebracht werden, kann die Herstellung insgesamt auf äusserst einfache und effiziente Art und Weise erfolgen. Die Rundspule, welche in der Regel eine grosse Spulenöffnung aufweist, kann aufgrund ihrer Form mit verhältnismässig geringem Aufwand mit Isolationsband umwickelt werden. Der anschliessende Formvorgang, mit welchem die Rundspule in die endgültige Form der Zahnspule gebracht wird, kann aufgrund der Flexibilität des oder der Litzendrähte mit einem geringen Kraftaufwand durchgeführt werden. Zudem ist aufgrund der gegenseitigen Verschiebbarkeit der Einzeldrähte des Litzendrahtes das Problem erheblich verringert, dass die Spule bei der Verformung in gewissen Bereichen zu bauchen tendiert. Aufgrund des geringeren Kraftaufwandes und der weniger stark ausgeprägten Tendenz zum Bauchen vermindert sich das Risiko erheblich, dass die Isolation während des Formvorgangs Schaden nimmt.

Dadurch kann für die Rundspule im Hinblick auf den Vorgang des Umwickelns mit Isolationsband eine beinahe beliebige, optimal für diesen Zweck geeignete Form gewählt werden.

Bei der elektrischen Maschine handelt es sich üblicherweise um einen Elektromotor oder einen Generator mit sehr kleiner Drehzahl und damit hoher Polzahl. Typische Anwendungen sind Schiffsmotoren, Windgeneratoren oder Hydrogeneratoren.

Nachdem die Spule in die endgültige Form der Zahnspule gebracht worden ist, kann sie in die Längsnut eines Stator- oder Rotorkerns eingesetzt werden. Die Rundspule sowie die Zahnspule bilden in der Regel jeweils eine umlaufend geschlossene Schleife mit einer seitlich umlaufend begrenzten Spulenöffnung. Die Zahnspule weist in ihrer endgültigen Form meist zwei geradlinige, parallel verlaufende Spulenlängsseiten sowie zwei die Endbereiche der Spulenlängsseiten miteinander verbindende Spulenstirnseiten auf, welche geradlinig oder gebogen ausgebildet sein können. Um das Umwickeln mit Isolationsband zu vereinfachen, hat die Rundspule vorteilhaft im Wesentlichen eine insgesamt flache Form.

Für das Wickeln des Litzendrahtes zu einer Rundspule wird bevorzugt ein Wickeldorn verwendet mit einer runden Aussenfläche, um welche herum der Litzendraht gewickelt wird. Die Aussenfläche des Wickeldorns definiert dann die Form der Spulenöffnung der Rundspule. Um einen möglichst hohen Füllgrad in der Längsnut des Stator- oder Rotorkerns zu erreichen, wird bevorzugt ein Litzendraht mit einem rechteckigen oder trapezförmigen Querschnitt verwendet. Der Litzendraht kann hierzu vor dem Wickeln zu einer Rundspule in eine Rechteck- oder Trapezform geformt, das heisst zum Beispiel gewalzt werden.

Vorteilhaft ist der Litzendraht bereits vor dem Wickeln zu einer Rundspule mittels einer Drahtisolation isoliert. Für die Einzeldrähte des Litzendrahtes bildet die Drahtisolation eine gemeinsame Aussenhülle. Bevorzugt umfasst der Litzendraht mehr als 10, bevorzugter mehr als 100, und am bevorzugtesten sogar mehr als 500 Einzeldrähte.

Durch die Verwendung eines Litzendrahtes lassen sich bei der elektrischen Maschine elektrische Zusatzverluste durch das Nutenquerfeld auf ein Minimum reduzieren. Zur optimalen Verlustreduktion können die Vielzahl von Einzeldrähten des Litzendrahtes gegeneinander isoliert werden. Besonders einfach kann eine solche Isolation mittels eines Oxidationsverfahrens auf die Einzeldrähte aufgebracht werden. Alternativ wäre zum Beispiel das Aufbringen einer Lackschicht auf die Einzeldrähte möglich.

Das Umwickeln der Rundspule mit Isolationsband erfolgt vorteilhaft maschinell mittels einer Wickelmaschine. Die runde Form der Spule erlaubt es, für die Umwicklung von zumindest einem Grossteil der Spule eine übliche und sehr schnell arbeitende Wickelmaschine zu verwenden. Für einen Grossteil der Spule ist also insbesondere keine Spezialmaschine oder gar eine Umwicklung von Hand notwendig. Die Rundspule wird bevorzugt zumindest in denjenigen Bereichen, welche später in die Längsnuten des Stator- oder Rotorkerns zu liegen kommen, maschinell mit Isolationsband umwickelt. Insbesondere bevorzugt wird die Rundspule sogar im Wesentlichen vollständig maschinell mit Isolationsband umwickelt. Das Umwickeln der Rundspule mittels der Wickelmaschine erfolgt dabei bevorzugt zumindest teilweise vollautomatisch.

Bevorzugt wird eine Wickelmaschine verwendet, welche einen Wickelring aufweist, der beim Umwickeln um den zumindest einen zu einer Rundspule gewickelten Litzendraht herum rotiert. Am Wickelring sind vorteilhaft eine oder mehrere Bandrollen angebracht, welche während des Umwickelns der Rundspule mit dem Wickelring um die zu isolierenden Spulenabschnitte rotieren. Falls die Rundspule eine geschlossene Schleife bildet mit einer seitlich umlaufend begrenzten Spulenöffnung, wie dies üblicherweise der Fall ist, wird der Wickelring durch die Spulenöffnung geführt, so dass die Bandrollen während der Rotation durch diese hindurch geführt werden. Aufgrund der runden Form der Spule ist dies beim erfindungsgemässen Verfahren auch bei Spulen möglich, welche eine verhältnismässig kleine Spulenöffnung haben.

Die Rundspule kann eine längliche, zum Beispiel ovale Form aufweisen. Die Spulenöffnung kann dann als Langloch ausgebildet sein. Bevorzugt weist die Rundspule aber eine im Wesentlichen kreisrunde Form mit einer insbesondere im Wesentlichen kreisrunden Spulenöffnung auf. Eine solche Form der Rundspule eignet sich optimal für das Umwickeln, insbesondere das maschinelle Umwickeln, mit Isolationsband. Dank der guten Biegbarkeit des Litzendrahtes ist es überhaupt möglich, dass sich die Spulenform während des Umwickelns mit Isolationsband so stark von der endgültigen Form der Zahnspule unterscheiden kann.

Das Formen der Rundspule in die endgültige Form der Zahnspule erfolgt mittels einer kombinierten Streck- und Pressvorrichtung. Die Spule kann zum Beispiel zuerst in eine längliche Form gestreckt bzw. auseinandergezogen werden, um danach in den Bereichen der Spulenlängsseiten bis zu einem Anschlag zusammengepresst zu werden, wobei das Zusammenpressen von einem gleichzeitigen Strecken bzw. Auseinanderziehen der Spule in den Bereichen der Spulenstirnseiten unterstützt werden kann.

Das Formen der Rundspule zur Zahnspule erfolgt dadurch, dass die Rundspule mittels zumindest eines Streckdorns entlang einer Längsrichtung auseinandergezogen wird. Zudem erfolgt das Formen der Rundspule zur Zahnspule dadurch, dass die Rundspule mittels zumindest eines Presselements in eine im Wesentlichen senkrecht zu einer Längsrichtung stehenden Richtung zusammengepresst wird.

Für das Formen der Rundspule zur Zahnspule wird zumindest ein Anschlagelement verwendet, um die beim Formvorgang zu erreichende Form der Zahnspule zu definieren. Das Anschlagelement kann insbesondere dazu verwendet werden, die Form der Längsseiten der Zahnspule vorzugeben. Das zumindest eine Anschlagelement wird während des Formens der Rundspule zur Zahnspule in die Spulenebene und somit die Spulenöffnung hinein bewegt. Das Anschlagelement kann dadurch eine grössere Länge aufweisen als der Aussendurchmesser der Spulenöffnung zu Beginn des Formvorgangs. Auf diese Weise kann das Anschlagelement insbesondere dazu verwendet werden, die Form der Längsseiten der Zahnspule entlang einem Grossteil ihrer Längserstreckung vorzugeben.

Die vorliegende Erfindung gibt ausserdem eine Zahnspule für den Stator oder Rotor einer elektrischen Maschine an, welche gemäss einem Verfahren entsprechend den obenstehenden Angaben hergestellt wurde.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Teilansicht des Vorgangs beim Wickeln von einem Litzendraht um einen Wickeldorn bei der Herstellung einer Rundspule gemäss einem erfindungsgemässen Verfahren;
- Fig. 2: eine perspektivische Teilansicht beim Vorgang des Umwickelns einer aus einem Litzendraht hergestellten Rundspule mit Isolationsband mittels einer Wickelmaschine gemäss einem erfindungsgemässen Verfahren;
- Fig. 3: eine schematische Ansicht von oben her des Vorgangs beim Formen einer mit Isolationsband umwickelten Rundspule zu einer Zahnspule mittels einer kombinierten Streck- und Pressvorrichtung gemäss einem erfindungsgemässen Verfahren;
- Fig. 4: eine Querschnittsansicht durch eine in die Nut eines Statorkerns eingesetzte Zahnspule, mit einer vergrösserten Detailansicht eines Bereiches der Zahnspule; sowie
- Fig. 5: ein Flussdiagramm zur Illustration der Abfolge der Verfahrensschritte eines erfindungsgemässen Verfahren.

### BESCHREIBUNG BEVORZUGTER AUSFÜHRUNGSFORMEN

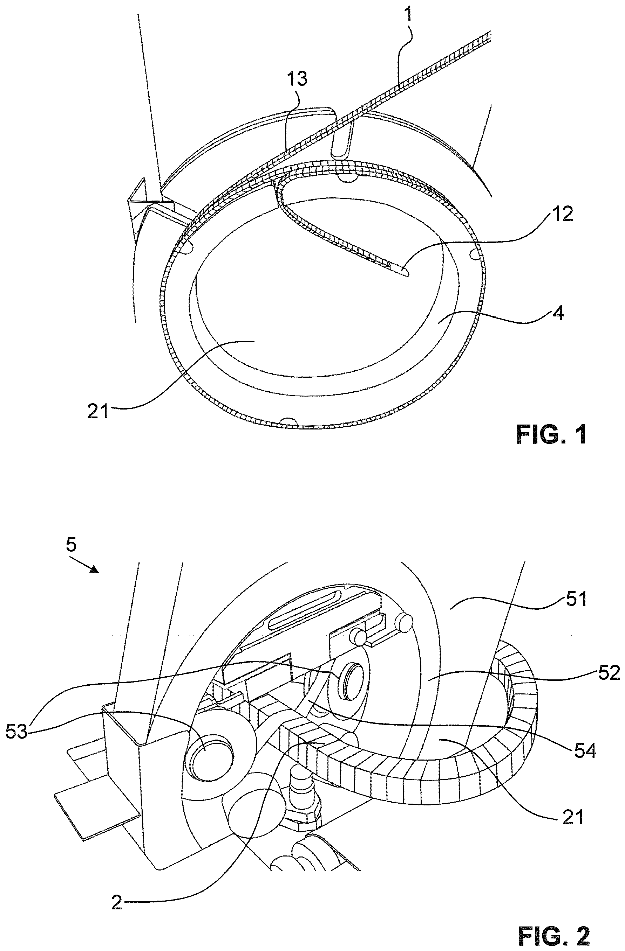

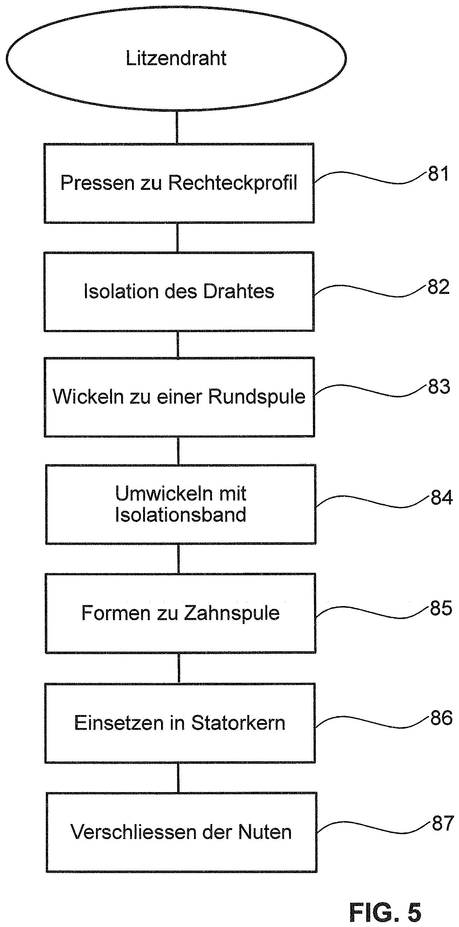

In den Figuren 1 bis 4 sind einzelne Schritte eines erfindungsgemässen Verfahrens zur Herstellung einer Zahnspule 3 für den Einsatz in einem Stator oder Rotor einer elektrischen Maschine gezeigt. In der Figur 5 ist die Abfolge von mehreren Verfahrensschritten bei einem beispielhaften, erfindungsgemässen Verfahren illustriert.

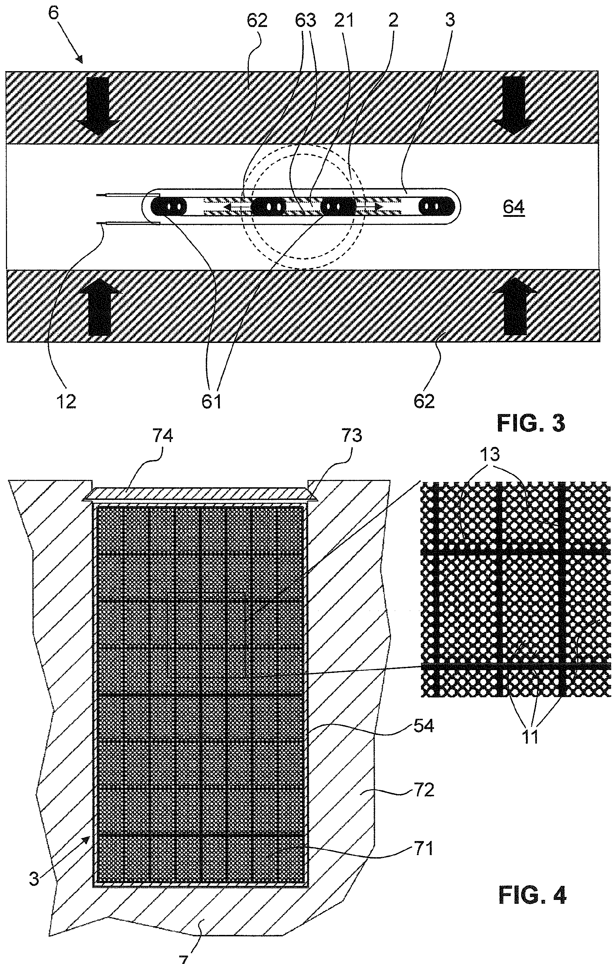

Als Ausgangspunkt eines beispielhaften, erfindungsgemässen Verfahrens wird ein Litzendraht 1 mit einem runden Querschnitt verwendet, welcher eine Vielzahl von üblicherweise dünnen Einzeldrähten 11 (siehe Figur 4) aufweist. Die Einzeldrähte 11, bei welchen es sich insbesondere um Kupferdrähte handeln kann, können miteinander verseilt und/oder verpresst sein.

Die Drahtdurchmesser der Einzeldrähte 11 liegen typischerweise im Bereich von ca. 0.3 mm bis 2 mm. Die Einzeldrähte 11 können, müssen aber nicht, gegenseitig elektrisch voneinander isoliert sein. Die Einzeldrähte 11 können somit jeweils blank vorliegen oder eine Einzeldrahtisolation aufweisen. Die Einzeldrahtisolation kann beispielsweise als Lackschicht und/oder Oxidationsschicht ausgebildet sein. Mit einer Einzeldrahtisolation können die elektrischen Verluste beim Betrieb der elektrischen Maschine auf ein Minimum reduziert werden.

In einem ersten Verfahrensschritt 81 (Figur 5) wird der Litzendraht 1 zu einem Rechteckquerschnitt geformt. Dadurch kann in der Längsnut 71 des Statorkerns 7 (Figur 4) ein hoher Füllgrad erreicht werden.

In einem weiteren Verfahrensschritt 82 kann die Aussenseite des Litzendrahts 1 elektrisch isoliert werden. Es wird dabei eine Drahtisolation 13 auf den Litzendraht 1 aufgebracht, welche eine gemeinsame äussere Umhüllung aller Einzeldrähte 11 des Litzendrahtes 1 bildet. Zusammen mit den Einzeldrähten 11 bildet die Drahtisolation 13 somit den Litzendraht 1. Falls die Einzeldrähte jeweils eine Einzeldrahtisolation aufweisen, kann in bestimmten Fällen auf die Drahtisolation 13 verzichtet werden.

Als Material für die Drahtisolation 13 kann beispielsweise eine Polyesterfolie oder eine Polyimidfolie verwendet werden. Es kann aber auch ein auf einem Folienträger aufgebrachtes Glimmerpaper verwendet werden. Die Drahtisolation 13 kann auch auf Aramidpapier, wie zum Beispiel das von der Firma Dupont vertriebene Produkt Nomex®, oder auf Glasgewebe, einer Glasumspinnung oder einem Glasgeflecht basieren.

Die Drahtisolation 13 kann insbesondere bandförmig ausgebildet sein und spiralförmig um die Vielzahl der Einzeldrähte 11 herum gewickelt sein. Das Anbringen der bandförmigen Drahtisolation 13 kann zum Beispiel halb überlappend erfolgen. Die Drahtisolation 13 kann aber auch gestossen aufgebracht werden, was bedeutet, dass die Seitenränder der bandförmigen Drahtisolation von Spiralwindung zu Spiralwindung jeweils aneinander angrenzen ohne sich gegenseitig zu überlappen. Falls die Drahtisolation 13 gestossen aufgebracht wird, werden in der Regel zumindest zwei Lagen versetzt zueinander aufgebracht, wobei der Versatz typischerweise zum Beispiel 30 % oder 50 % der Bandbreite beträgt. Die Drahtisolation 13 kann eine beliebige Anzahl von Lagen umfassen, welche auf beliebige Art und Weise mit oder ohne gegenseitigen Versatz auf die Vielzahl der Einzelleiter 11 aufgebracht werden.

Im Verfahrensschritt 83 wird der zu einem Recheckprofil gewalzte und mit einer Drahtisolation 13 versehene Litzendraht 1 zu einer Rundspule 2 gewickelt. Dazu wird, wie es in der Figur 1 erkennbar ist, ein Wickeldorn 4 mit einer hier kreisrunden Aussenfläche verwendet, um welche herum der Litzendraht 1 gewickelt wird. Die Rundspule 2 erhält dadurch eine insgesamt im Wesentlichen flache Form mit einer im Wesentlichen kreisrunden Spulenöffnung 21. Die Spulenöffnung 21 ist umlaufend vom Litzendraht 1 begrenzt.

Das erste freie Drahtende 12 des Litzendrahtes 1, welches in der Figur 1 sichtbar ist, wird beim Wickeln auf dem Wickeldorn 4 zu einer Rundspule 2 in einer entsprechend dafür vorgesehenen Haltevorrichtung des Wickeldorns gehalten, so dass der Zugang zu diesem Drahtende 12 auch nach dem Wickelvorgang gewährleistet ist.

Die Rundspule 2 wird anschliessend, im Verfahrensschritt 84 (Figur 5), mittels einer Wickelmaschine 5 mit einem Isolationsband 54 umwickelt. Dieser Verfahrensschritt ist in der Figur 2 gezeigt. Das Isolationsband 54 dient dazu, die Rundspule 2 elektrisch nach aussen hin zu isolieren, so dass beim späteren Einsatz in der elektrischen Maschine keine Kurzschlussströme zum Blechpaket auftreten können. Das Isolationsband 54 bildet die Hauptisolation der Rundspule 2 bzw. der Zahnspule 3.

Die Wickelmaschine 5 weist eine Haltevorrichtung 51 auf, in welcher ein Wickelring 52 drehbar gelagert ist. Am Wickelring 52 sind zwei Bandrollen 53 diametral gegenüberliegend zueinander angebracht, welche im Wesentlichen frei drehbar sind, und auf welchen jeweils ein Isolationsband 54 aufgewickelt ist.

Das Isolationsband 54 basiert bevorzugt auf Glimmer. Je nachdem, welches elektrische Spannungsniveau für die jeweilige Zahnspule 3 beim Einsatz in der elektrischen Maschine vorgesehen ist, kann eine entsprechende Anzahl von Lagen des Isolationsbandes 54 auf die Rundspule 2 aufgebracht werden. Alternativ oder ergänzend können eine oder mehrere Lagen des Isolationsbandes 54 auch manuell auf die Rundspule 2 aufgebracht werden. Das Isolationsband 54 kann insbesondere in den Bereichen der Drahtenden 12 von Hand aufgebracht werden.

Während des in der Figur 2 gezeigten Isolationsvorgangs durchragt die Rundspule 2 den Wickelring 52 der Wickelmaschine 5 ebenso wie der Wickelring 52 selbst die Spulenöffnung 21 der Rundspule 2 durchragt. Der kreisförmige Wickelring 52 umgibt den Litzendraht 1 der Rundspule 2 dabei vollständig. Für den Umwicklungsvorgang wird das in der ersten Bandrolle 53 gelagerte Isolationsband 54 an der Aussenseite des den Wickelring 1 durchragenden Litzendrahtes 1 der Rundspule 2 befestigt. Ebenso wird das Isolationsband 54, welches in der zweiten Bandrolle 53 gelagert ist, an der Aussenseite der Rundspule 2 befestigt. Für die Umwicklung wird der Wickelring 52 dann um den Litzendraht 1 der Rundspule 2 gedreht, so dass er sich mit den Bandrollen 53 durch die Spulenöffnung 21 hindurch bewegt. Gleichzeitig wird der Wickelring 52 kontinuierlich entlang des Litzendrahtes 1 bzw. in Umfangsrichtung der Rundspule 2 fortbewegt. Für den Antrieb des Wickelrings 52 ist ein an der Haltevorrichtung 51 angebrachter Antriebsmotor vorgesehen. Während sich der Wickelring 52 um den Litzendraht 1 der Rundspule 2 dreht, wird Isolationsband 54 von den beiden Bandrollen 53 abgerollt. Der Umwicklungsvorgang der Rundspule 2 mit Hilfe einer Wickelmaschine des Standes der Technik mit Wickelring 52, wie in der Figur 2 gezeigt, ist dem Fachmann hinlänglich bekannt.

Aufgrund der kreisrunden Form der Rundspule 2 weist die Spulenöffnung 21 eine maximale Grösse auf. Die Rundspule 2 ist dadurch optimal für die vollautomatische maschinelle Umwicklung mit Isolationsband 54 geeignet. Aufgrund der grossen Spulenöffnung 21 können insbesondere verhältnismässig grosse Bandrollen 53 verwendet werden, welche entsprechend weniger oft, im Idealfall während des Umwickelns einer Rundspule 2 sogar gar nie, ausgewechselt werden müssen. Die maschinelle Umwicklung ermöglicht eine regelmässige Umwicklung der Rundspule 2 mit genau vorbestimmbaren Wickelparametern wie Bandwinkel, Bandzug, Überlappung etc. Gleichzeitig kann die Umwicklung innert kurzer Zeit und mit minimalem Aufwand durchgeführt werden.

Nach Aufbringen der Hauptisolation, also des Isolationsbandes 54, kann diese allenfalls noch mit einem Nutglimmschutzband umhüllt werden. Dies ist erforderlich bei Maschinenspannungen grösser 1kV, um sogenannte Nutentladungen zu vermeiden. Das Nutglimmschutzband, welches beim Einsatz in der elektrischen Maschine direkt zwischen der Hauptisolation und dem Eisen des Stator- bzw. Rotorkerns zu liegen kommt, kann maschinell mittels der Wickelmaschine 5 oder von Hand aufgebracht werden. Optional kann in den Bereichen der späteren Spulenstirnseiten, noch ein Endenglimmschutzband aufgebracht werden, welches ausserhalb der Längsnuten 71 des Statorkerns 7 (Fig. 4) zu liegen kommt, allenfalls noch ein Schrumpfband angebracht werden.

Anschliessend wird die mit Isolationsband 54 umwickelte Rundspule 2 in einem weiteren Verfahrensschritt 85 (Figur 5) in die endgültige Form der in der elektrischen Maschine verwendeten Zahnspule 3 gebracht. Die Rundspule 2 wird hierzu in eine Formvorrichtung 6 gebracht, wie sie schematisch in der Figur 3 gezeigt ist.

Die Anfangsform und -position der in die Formvorrichtung 6 gebrachten Rundspule 2 ist in der Figur 3 mit gestrichelten Linien gezeigt. Die Rundspule 2 wird derart in die Formvorrichtung 6 eingesetzt, dass die Spulenöffnung 21 von zwei Streckdornen 61 der Formvorrichtung 6 durchragt wird. Dabei liegt die Rundspule 2 auf der Oberfläche eines Tisches 64 der Formvorrichtung 6 auf und ist zudem zwischen zwei Presselementen 62 angeordnet. Die Formvorrichtung 6 kann zwei Anschlagplatten 63 aufweisen, welche zu Beginn des Formvorgangs jedoch noch im Tisch 64 versenkt sind und insbesondere nicht in die Spulenöffnung 21 hineinragen. Die Anschlagplatten 63 erstrecken sich parallel zueinander.

Die beiden Streckdorne 61 werden dann bis zum Anschlag mit der radialen Innenseite der Rundspule 2 nach aussen verschoben. Diese Anfangsposition der Streckdorne 61 ist in der Figur 3 gezeigt. Um die Rundspule 2 in eine längliche Form zu bringen, werden die Streckdorne 61 anschliessend in Richtung der in der Figur 3 gezeigten Pfeile weiter nach aussen und voneinander weg verschoben, so dass die Rundspule 2 entlang einer Längsrichtung gestreckt oder, anders ausgedrückt, auseinandergezogen wird.

Gleichzeitig oder anschliessend an das Auseinanderziehen der Rundspule 2 mittels der Streckdorne 61, wird die Spule mittels der beiden Presselemente 62 in eine senkrecht zur Längsrichtung stehende Richtung von den Seiten her zusammengepresst. Der Streckvorgang wird dadurch durch den Pressvorgang unterstützt bzw. ergänzt. Bei der Formvorrichtung 6 handelt es sich somit um eine kombinierte Streck- und Pressvorrichtung.

Sobald die beiden Streckdorne 61 bis zu einem bestimmten Punkt auseinandergefahren sind und die Spulenöffnung 21 eine gewisse Längserstreckung in Längsrichtung aufweist, können die beiden Anschlagplatten 63 aus dem Tisch 64 nach oben gefahren werden, so dass sie in die Spulenöffnung 21 hineinragen. Der Streck- und Pressvorgang wird fortgesetzt bis die Längsseiten der Spule an den Anschlagplatten 63 anschlagen und durch diese in eine geradlinige Endform gebracht werden. Die Streckdorne 61 nehmen dann die in der Figur 3 gezeigte Endposition im Bereich der Spulenstirnseiten der Zahnspule 3 ein. Die Zahnspule 3 ist somit in ihrer endgültigen Form.

Aufgrund der guten Biegbarkeit des Litzendrahtes 1 ist der Kraftaufwand während des Formvorgangs in der Formvorrichtung 6 verhältnismässig gering. Das Risiko, dass die Hauptisolation und somit das Isolationsband 54 dabei beschädigt wird, wird dadurch vermindert. Es kann dadurch, wie es im vorliegenden Ausführungsbeispiel der Fall ist, eine verhältnismässig grosse Formveränderung von der kreisrunden Rundspule 2 zur länglichen Zahnspule 3 stattfinden, ohne dass die Isolation beschädigt wird.

Im Verfahrensschritt 86 (Fig. 5) wird die Zahnspule 3 dann in eine Längsnut 71 eines Statorkerns 7 eingesetzt. Die Längsnut 71 wird dabei in Umfangsrichtung des in der Figur 4 nur teilweise gezeigten Statorkerns 7 von Zähnen 72 begrenzt.

Im letzten Verfahrensschritt 87 (Fig. 5) werden die Längsnuten 71 verschlossen. Dies kann, muss aber nicht, mit jeweils einem Verschlusskeil 74 erreicht werden, der in Einsatzrillen 73 eingesetzt wird, welche an den Zähnen 72 des Statorkerns 7 vorgesehen sind. Der Statorkern 7 ist üblicherweise als Blechkörper ausgebildet und kann in voneinander trennbare Segmente aufgeteilt sein.

Nach dem Anbringen der Zahnspulen 3 am Statorkern 7 kann dieser zusammen mit den darin eingesetzten Zahnspulen 3 mittels Ganztränktechnik in einem Harzbad unter Vakuum imprägniert werden. Das entsprechende Vorgehen ist dem Fachmann bekannt.

Alternativ können die Zahnspulen 3 auch jeweils separat voneinander und getrennt vom Statorkern 3 in einem Harzbad und unter Vakuum imprägniert werden. In diesem Fall werden die Zahnspulen 3 jeweils in einen entsprechend vorbereiteten und geformten Formkörper eingebracht, welcher im Wesentlichen der Geometrie der Längsnut 71 entspricht. Vor dem Einbringen der Zahnspule 3 wird eine Trennfolie in den Formkörper eingelegt, um die Zahnspule 3 vom Formkörper zu trennen. Der Formkörper wird dann verschlossen und die darin aufgenommene Zahnspule 3 mittels eines Vakuumimprägnierverfahrens mit einem Harz imprägniert. Nach dem Aushärten in einem Ofen wird die Zahnspule 3 aus dem Formkörper herausgenommen und die Trennfolie sowie gegebenenfalls die in den Bereichen der Spulenstirnseiten zuvor aufgebrachten Schrumpfbänder entfernt. Auch dieses Vorgehen ist dem Fachmann hinlänglich bekannt.

Die vorliegende Erfindung ist selbstverständlich nicht auf das erläuterte Ausführungsbeispiel beschränkt, und eine Vielzahl von Abwandlungen ist möglich. So kann zum Beispiel die Wickelmaschine eine komplett andere Ausgestaltung aufweisen, als dies in der Figur 2 dargestellt ist. Die Verwendung einer Wickelmaschine kann sogar gänzlich entfallen, und die Rundspule 2 kann von Hand mit Isolationsband 54 umwickelt werden. Die grosse, insbesondere kreisrunde Spulenöffnung 21 der Rundspule 2 erlaubt auch dann eine einfache Umwicklung. Auch die Formvorrichtung 6 kann selbstverständlich eine andere Ausgestaltung aufweisen. Eine beliebige Anzahl weiterer Verfahrensschritte können hinzukommen, und eine Vielzahl weiterer Abwandlungen ist denkbar.

**BEZUGSZEICHENLISTE**

| | | | |
|---|---|---|---|
| 1 | Litzendraht | 54 | Isolationsband |
| 11 | Einzeldraht | | |
| 12 | Drahtende | 6 | Formvorrichtung |
| 13 | Drahtisolation | 61 | Streckdorn |
| | | 62 | Presselement |
| 2 | Rundspule | 63 | Anschlagplatte |
| 21 | Spulenöffnung | 64 | Tisch |
| | | | |
| 3 | Zahnspule | 7 | Statorkern |
| | | 71 | Längsnut |
| 4 | Wickeldorn | 72 | Zahn |
| | | 73 | Einsatzrille |
| 5 | Wickelmaschine | 74 | Verschlusskeil |
| 51 | Haltevorrichtung | | |
| 52 | Wickelring | 81-87 | Verfahrensschritte |
| 53 | Bandrolle | | |

## Patentansprüche

1. Verfahren zur Herstellung einer Zahnspule (3) für den Einsatz in einem Stator oder Rotor einer elektrischen Maschine, aufweisend zumindest die folgenden Schritte:
- Wickeln von zumindest einem Litzendraht (1) zu einer Rundspule (2);
- Umwickeln dieser Rundspule (2) mit Isolationsband (54); sowie
- Formen der mit dem Isolationsband (54) umwickelten Rundspule (2) in die endgültige Form einer Zahnspule (3), wobei die Rundspule (2) derart in eine kombinierte Streck- und Pressvorrichtung (6) eingesetzt wird, dass eine Spulenöffnung (21) der Rundspule (2) von zwei Streckdornen (61) der kombinierten Streck- und Pressvorrichtung (6) durchragt wird, wobei die beiden Streckdorne (61) anschliessend nach aussen und voneinander weg verschoben werden, so dass die Rundspule (2) entlang einer Längsrichtung auseinandergezogen wird, wobei die Rundspule (2) zudem mittels zumindest eines Presselements (62) in eine im Wesentlichen senkrecht zur Längsrichtung stehende Richtung zusammengepresst wird, und wobei zumindest ein Anschlagelement (63), welches eine grössere Länge aufweist als der Aussendurchmesser der Spulenöffnung (21) zu Beginn des Formvorgangs, während des Formens der Rundspule (2) zur Zahnspule (3) in die Spulenebene hinein bewegt wird, um die beim Formvorgang zu erreichende endgültige Form der Zahnspule (3) zu definieren.

2. Verfahren nach Anspruch 1, wobei das Umwickeln der Rundspule (2) mit Isolationsband (54) maschinell mittels einer Wickelmaschine (5) erfolgt.

3. Verfahren nach Anspruch 2, wobei das Umwickeln der Rundspule (2) mittels der Wickelmaschine (5) zumindest teilweise vollautomatisch erfolgt.

4. Verfahren nach Anspruch 2 oder 3, wobei die Wickelmaschine (5) einen Wickelring (52) aufweist, welcher beim Umwickeln um den zumindest einen zu einer Rundspule (2) gewickelten Litzendraht (1) herum rotiert.

5. Verfahren nach einem der vorhergehenden Ansprüche, wobei die Rundspule (2) eine im Wesentlichen kreisrunde Form aufweist.

6. Verfahren nach einem der vorhergehenden Ansprüche, wobei die Zahnspule (3) zwei parallel zueinander verlaufende Längsseiten aufweist.

7. Verfahren nach einem der vorhergehenden Ansprüche, wobei der Litzendraht (1) vor dem Wickeln zu einer Rundspule (2) derart geformt wird, dass er einen im Wesentlichen rechteckigen oder trapezförmigen Querschnitt aufweist.

8. Verfahren nach einem der vorhergehenden Ansprüche, wobei der Litzendraht (1) vor dem Wickeln zu einer Rundspule (2) mittels einer Drahtisolation (13) isoliert wird.

9. Verfahren nach einem der vorhergehenden Ansprüche, wobei der Litzendraht (1) eine Vielzahl von Einzeldrähten aufweist, welche mittels eines Oxidationsverfahrens gegeneinander isoliert werden.

## Claims

1. Method for the production of a tooth coil (3) for use in a stator or rotor of an electrical machine, comprising at least the following steps:
- winding of at least one stranded wire (1) to form a round coil (2);
- winding an insulating tape (54) around this round coil (2); and
- forming the round coil (2) wound with the insulating tape (54) into the final shape of a tooth coil (3), wherein the round coil (2) is inserted in such a way into a combined stretching and pressing device (6), that a coil opening (21) of the round coil (2) is penetrated by two stretching mandrels (61) of the combined stretching and pressing device (6), wherein the two stretching mandrels (61) are subsequently displaced outwards and away from each other in such a way that the round coil (2) is stretched along a longitudinal direction, wherein the round coil (2) is additionally compressed in a direction that is essentially perpendicular to the longitudinal direction, and wherein at least one abutting element (63), which has a greater length than the outer diameter of the coil opening (21) at the beginning of the forming process, is moved into the coil level during the forming of the round coil (2) to the tooth coil (3), in order to define the final shape of the tooth coil (3) to be achieved during the forming process.

2. Method according to claim 1, wherein the round coil (2) is automatically wound with insulating tape (54) by means of a winding machine (5).

3. Method according to claim 2, wherein the winding of the round coil (2) by means of the winding machine (5) is at least partially fully automatic.

4. Method according to claim 2 or 3, wherein the winding machine (5) comprises a winding ring (52) which rotates around the at least one stranded wire (1) wound into a round spool (2) during winding.

5. Method according to one of the preceding claims, wherein the round coil (2) has an essentially circular shape.

6. Method according to one of the preceding claims, wherein the tooth coil (3) has two longitudinal sides extending parallel to each other.

7. Method according to one of the preceding claims, wherein the stranded wire (1), before being wound into a round spool (2), is formed in such a way that it has an essentially rectangular or trapezoidal cross-section.

8. Method according to one of the preceding claims, wherein the stranded wire (1) is insulated by means of a wire insulation (13) before being wound into a round coil (2).

9. Method according to one of the preceding claims, wherein the stranded wire (1) comprises a plurality of individual wires which are insulated from one another by means of an oxidation process.

## Revendications

1. Procédé de fabrication d'une bobine dentée (3) destinée à être utilisée dans un stator ou rotor d'une machine électrique, comprenant au moins les étapes suivantes:
- enroulement d'au moins un fil toronné (1) en une bobine ronde (2);
- envelopper cette bobine ronde (2) de ruban isolant (54); et
- mettre la bobine ronde (2) enveloppée avec le ruban isolant (54) en forme finale de bobine dentée (3), dans lequel la bobine ronde (2) est insérée dans un dispositif combiné d'étirage et de pression (6) de telle sorte qu'une ouverture de bobine (21) de la bobine ronde (2) est traversée par deux mandrins d'étirage (61) du dispositif combiné d'étirage et de pression (6), dans lequel les deux mandrins d'étirage (61) sont ensuite déplacés vers l'extérieur et en s'éloignant l'un de l'autre, de sorte que la bobine ronde (2) est allongée le long d'une direction longitudinale, dans lequel la bobine ronde (2) est en outre comprimée au moyen d'au moins un élément de compression (62) dans une direction sensiblement perpendiculaire à la direction longitudinale, et dans lequel au moins un élément d'arrêt (63), lequel présente une longueur supérieure au diamètre extérieur de l'ouverture de bobine (21) est déplacé dans le plan de bobine lors de la mise en forme de la bobine ronde (2) en bobine dentée (3), afin de définir la forme finale de la bobine dentée (3) à réaliser pendant le processus de mise en forme.

2. Procédé selon la revendication 1, dans lequel l'enveloppement autour de la bobine ronde (2) avec du ruban isolant (54) est effectué par machine au moyen d'une machine d'enroulement (5).

3. Procédé selon la revendication 2, dans lequel l'enveloppement autour de la bobine ronde (2) au moyen de la machine d'enroulement (5) a lieu au moins partiellement entièrement automatiquement.

4. Procédé selon la revendication 2 ou 3, dans lequel la machine d'enroulement (5) a une bague d'enroulement (52), qui lors de l'enveloppement tourne autour de l'au moins un fil toronné (1) enroulé pour former une bobine ronde (2).

5. Procédé selon l'une des revendications précédentes, dans lequel la bobine ronde (2) a une forme sensiblement circulaire.

6. Procédé selon l'une des revendications précédentes, dans lequel la bobine dentée (3) a deux côtés longitudinaux parallèles l'un à l'autre.

7. Procédé selon l'une des revendications précédentes, dans lequel le fil toronné (1) est formé avant d'être enroulé en bobine ronde (2) de manière à avoir une section transversale sensiblement rectangulaire ou trapézoïdale.

8. Procédé selon l'une des revendications précédentes, dans lequel le fil toronné (1) est isolé avant d'être enroulé en bobine ronde (2) au moyen d'une isolation de fil (13).

9. Procédé selon l'une des revendications précédentes, dans lequel le fil toronné (1) a une pluralité de fils individuels, lesquels sont isolés les uns des autres au moyen d'un processus d'oxydation.
